# EUROPEAN PATENT SPECIFICATION

(11) **EP 2 599 666 B1**
(45) Date of publication and mention of the grant of the patent: **11.02.2015**
(21) Application number: 10855307.4
(22) Date of filing: 28.07.2010
(51) Int. Cl.: B60R 21/34, B62D 25/08, B60Q 5/00, B60K 11/04, B60R 19/52

(54) **STRUCTURE FOR VEHICLE BODY FRONT PORTION**
STRUKTUR EINES VORDERTEILS EINER FAHRZEUGKAROSSERIE
STRUCTURE DE PARTIE AVANT DE CARROSSERIE DE VÉHICULE

(43) Date of publication of application: 05.06.2013
(73) Proprietor: TOYOTA JIDOSHA KABUSHIKI KAISHA, Toyota-shi, Aichi-ken, 471-8571 (JP)
(72) Inventor: MIWA, Shinji, Toyota-shi, Aichi-ken, 471-8571 (JP); NAKANO, Shirou, Toyota-shi, Aichi-ken, 471-8571 (JP); NAKANO, Takashi, Toyota-shi, Aichi-ken, 471-8571 (JP)
(74) Representative: Winter, Brandl, Fürniss, Hübner, Röss, Kaiser, Polte - Partnerschaft mbB
(86) International application number: PCT/JP2010/062717
(87) International publication number: WO 2012/014297

(56) References cited:
- JP-A- 2004 106 718
- JP-A- 2005 067 488
- JP-A- 2005 212 734
- JP-A- 2006 096 280
- JP-A- 2007 001 528
- JP-A- 2007 055 331
- JP-A- 2007 069 825
- JP-A- 2009 286 241
- JP-U- H0 535 556

## Description

### Technical Field

The present invention relates to a vehicle body front portion structure in which a bracket for parts mounting is fixed to a skeleton member beneath a hood front end portion.

### Background Art

There is known a front grill structure for an automobile in which the rear end of a stay is fixed to the front wall of an upper member to which the upper end of a radiator is fixed, and a horn is mounted to this stay. (See, for example, Japanese Patent Application Laid-Open No. 2009-286241.) Further, there is known a structure in which a horn is mounted, via a bracket, to the back surface side of a cross member that is provided at the reverse side of a front bumper (see, for example, Japanese Patent Application Laid-Open No. 2007-55331).

JP 2006 096 280 A discloses a structure according to the preamble of claim 1.

### DISCLOSURE OF INVENTION

### Technical Problem

By the way, in a deformation mode in which the front end portion of the hood is bent, when a bracket for parts mounting that is disposed beneath the hood interferes with the hood that is in the process of deforming, it becomes a cause of an increase in the generated load that accompanies the absorption of energy.

An object of the present invention is to obtain a vehicle body front portion structure that, when an impact is inputted to a hood front end, can absorb impact energy by a needed load even while the hood interferes with a bracket for parts mounting.

### Solution to Problem

A vehicle body front portion structure relating to a first aspect of the present invention comprises: a hood member that covers a front portion of a vehicle from an upper side; a skeleton member that has a top wall facing an upper side in a vehicle up-down direction and a front wall facing a front side in a vehicle front-rear direction, and that is long along a vehicle transverse direction, and that is disposed at a vehicle lower side with respect to a front end side, in the vehicle front-rear direction, of the hood member; a bracket for part fixing that is structured to include a ceiling plate portion at whose rear end portion in the vehicle front-rear direction is provided an upper joining portion that is fixed to the top wall, and a bottom plate portion at whose rear end portion in the vehicle front-rear direction is provided a lower joining portion that is fixed to vehicle the front wall, and a front plate portion that connects a front end side in the vehicle front-rear direction of the ceiling plate portion and a front end side in the vehicle front-rear direction of the bottom plate portion; and fixing canceling means, provided between the upper joining portion of the ceiling plate portion and the top wall of the skeleton member, for canceling a fixed state of the upper joining portion and the top wall such that the upper joining portion is displaced relatively toward a front side in the vehicle front-rear direction with respect to the top wall, with respect to input of load of a predetermined value or more from a vehicle front upper side to the bracket.

In accordance with the above-described aspect, the bracket forms a closed cross-sectional structure by the ceiling plate portion, bottom plate portion and front plate portion thereof, and the skeleton member front wall. When a collision body collides with the front end portion of the hood, the hood deforms such that the front end portion is bent downward. When, in the process of this deformation of the hood, the hood interferes with the (part mounted to the) bracket that is fixed so as to jut-out further toward the front side than the skeleton member, load of a predetermined value or more from the vehicle front upper side is inputted to the bracket. Thus, at the bracket, the fixing cancelling means functions, and the fixed state of the ceiling plate portion with the top wall of the skeleton member at the upper fixing portion is cancelled, and at least relative displacement of the ceiling plate portion toward the front with respect to the top wall becomes possible. Due thereto, the bracket translates from a closed cross-sectional structure to a state of (that is near) cantilever-support in which the lower fixing portion of the bottom plate portion is fixed to the skeleton member, and thereafter, the bracket is deformed, following the deformation of the hood front end, by a low load. Due thereto, the deformation stroke of the hood front end portion is ensured, and absorption of the collision energy of the collision body to the hood front end portion is achieved.

In this way, in the vehicle body front portion structure relating to the above-described aspect, when an impact is inputted to the hood front end, the impact energy can be absorbed by the needed load even while the hood interferes with a bracket for parts mounting.

The above-described aspect may be structured such that the fixing canceling means is structured to include a fastening structure by a bolt that fixes the ceiling plate portion to the top wall by a predetermined fastening load, and a bolt relief portion that is connected, at a rear side in the vehicle front-rear direction, to a portion through which the bolt is inserted at the ceiling plate portion.

In accordance with the above-described aspect, usually, the ceiling plate portion of the bracket is fixed firmly to the top wall of the skeleton member by the fastening structure by the bolt. Due thereto, the needed mounting rigidity is ensured. Further, a predetermined input load to the bracket, by which the fixing is cancelled, is set by the fastening load of the bolt. When fixing by the fastening structure by the bolt is cancelled, due to the bolt moving to the bolt relief portion, relative displacement of the ceiling plate portion toward the vehicle front side with respect to the top wall is permitted by a low load.

The above-described aspect may be structured such that the lower fastening portion is fixed to the front wall of the skeleton member at a flange portion that is formed by a rear end portion, in the vehicle front-rear direction, of the bottom plate portion being folded-over downward in the vehicle up-down direction, and, at the bottom plate portion, a bead, that is long in the vehicle front-rear direction and is convex toward an upper side in the vehicle up-down direction, is formed from the front plate portion to the flange portion.

In accordance with the above-described aspect, the rigidity of the bracket itself is ensured by the bead that is formed at the bottom plate portion from the front wall to the flange portion. Due to the bracket, that has translated to the cantilevered state due to the collision of the collision body as described above, deforming such that the corner portion of the flange portion and the bottom plate portion bends, downward deformation of the hood front end portion is permitted. Here, because the bead that is formed at the bottom plate portion is convex upwardly, the bead is not nipped between the bottom plate portion and the flange portion that deform so as to bend as described above. Namely, due to the above-described bead, a function of improving the supporting rigidity of a part by the bracket, and a function of not impeding deformation of the bracket at the time of a collision of a collision body, can both be achieved.

The above-described aspect may be structured such that a projecting height of the bead from the bottom plate portion at the front plate portion side is smaller than a projecting height from the bottom plate portion at the flange portion side.

In accordance with the above-described aspect, due to the bracket, that has translated to the cantilevered state due to the collision of the collision body as described above, deforming such that the front plate portion and the bottom plate portion are bent also in directions of approaching, downward deformation of the hood front end portion is permitted. Here, because the projecting height of the bead from the bottom plate portion is lower at the front end side thereof than the rear end side, it is difficult for deformation of the bracket, in the above-described direction in which the front plate portion and the bottom plate portion approach, to be impeded.

The above-described aspect may structured such that, at the ceiling plate portion, a bead, that is long in the vehicle front-rear direction and is convex toward an upper side in the vehicle up-down direction, is formed from the front plate portion to the upper joining portion.

In accordance with the above-described aspect, the rigidity of the bracket itself is ensured by the bead that is formed at the ceiling plate portion from the front wall to the flange portion. Due to the bracket, that has translated to the cantilevered state due to the collision of the collision body as described above, deforming such that the angle formed by the ceiling plate portion and the front plate portion widens, downward deformation of the hood front end portion is permitted. Here, because the bead that is formed at the ceiling plate portion is convex upwardly, the bead does not receive pulling between the ceiling plate portion and the front plate portion so as to resist the deformation to widen the angle as described above. Namely, a function of improving the supporting rigidity of a part by the bracket, and a function of not impeding deformation of the bracket at the time of a collision of a collision body, can both be achieved.

### Advantageous Effects of Invention

As described above, the vehicle body front portion structure relating to the present invention has the excellent effect that, when an impact is inputted to a hood front end, impact energy can be absorbed by the needed load even while the hood interferes with a bracket for parts mounting.

### BRIEF DESCRIPTION OF DRAWINGS

Fig. 1A is a side sectional view showing a vehicle body front portion structure relating to an embodiment of the present invention.
Fig. 1B is a side sectional view showing an impact absorbing state at the vehicle body front portion structure relating to the embodiment of the present invention.
Fig. 2A is a partially cut-away side view showing, in an enlarged manner, main portions of the vehicle body front portion structure relating to the embodiment of the present invention.
Fig. 2B is a partially cut-away side view showing, in an enlarged manner, a deformed state of a bracket that structures the vehicle body front portion structure relating to the embodiment of the present invention.
Fig. 3 is a plan view showing a front portion of an automobile to which the vehicle body front portion structure relating to the embodiment of the present invention is applied.
Fig. 4 is a perspective view of the bracket that structures the vehicle body front portion structure relating to the embodiment of the present invention.
Fig. 5 is a plan view of the bracket that structures the vehicle body front portion structure relating to the embodiment of the present invention.
Fig. 6 is a plan view showing a first modified example of the vehicle body front portion structure relating to the embodiment of the present invention.
Fig. 7 is a plan view showing a second modified example of the vehicle body front portion structure relating to the embodiment of the present invention.
Fig. 8 is a plan view showing a third modified example of the vehicle body front portion structure relating to the embodiment of the present invention.
Fig. 9 is a side view showing a fourth modified example of the vehicle body front portion structure relating to the embodiment of the present invention.
Fig. 10 is a side view showing a fifth modified example of the vehicle body front portion structure relating to the embodiment of the present invention.
Fig. 11 is a side view showing a sixth modified example of the vehicle body front portion structure relating to the embodiment of the present invention.

### BEST MODES FOR CARRYING OUT THE INVENTION

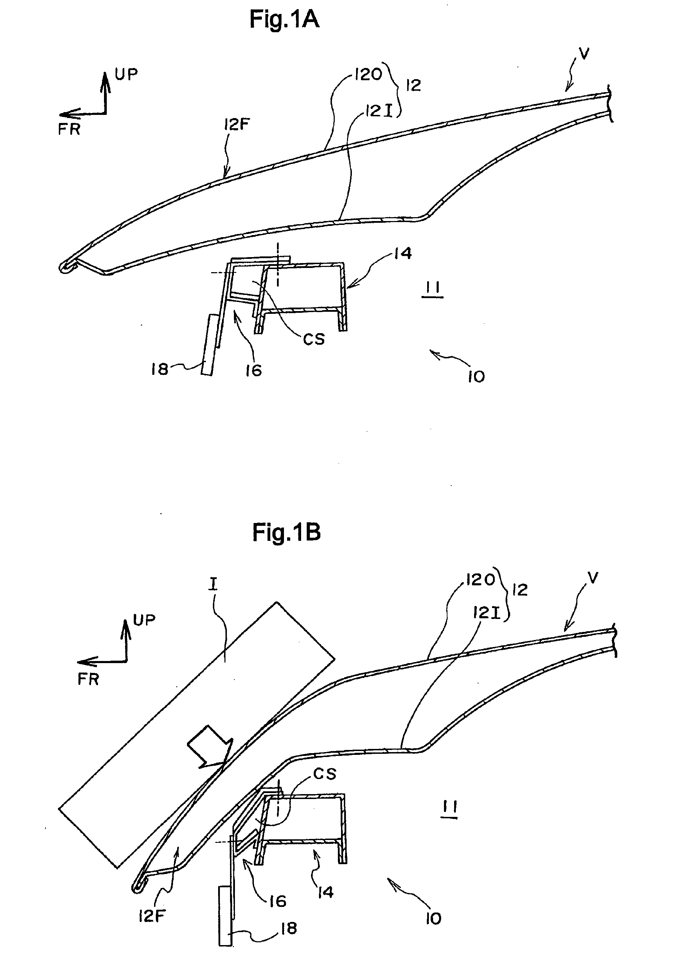

A vehicle body front portion structure 10 relating to an embodiment of the present invention is described on the basis of Fig. 1 through Fig. 5. Note that arrow FR that is written appropriately in the drawings indicates the front direction in the vehicle front-rear direction, arrow UP indicates the upward direction in the vehicle up-down direction, and arrow W indicates the vehicle transverse direction, respectively. In the following explanation, when front-rear and up-down directions are used, they indicate the front and the rear in the vehicle front-rear direction and upward and downward in the vehicle up-down direction, unless specially mentioned.

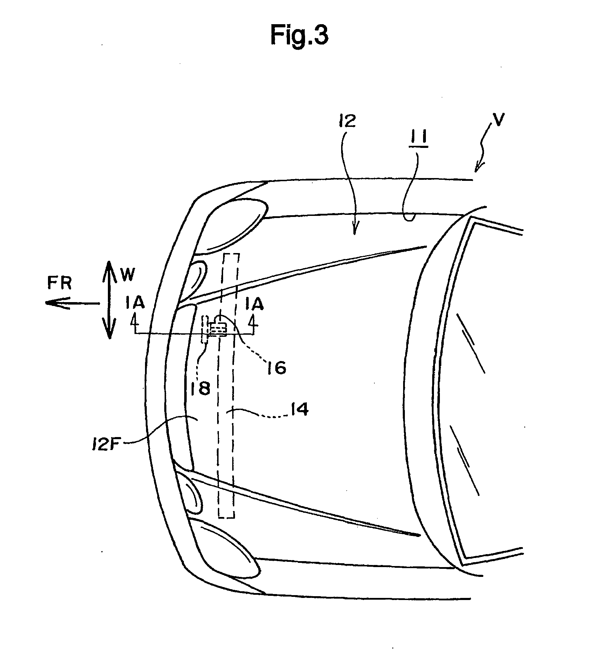

A front portion of an automobile V to which the vehicle body front portion structure 10 is applied is shown in a plan view in Fig. 3. A sectional view along line 1A-1A of Fig. 3 is shown in Fig. 1A. As shown in these drawings, the automobile V has a hood 12 that serves as a hood member that closes, from the upper side, an engine room 11 that serves as an opening portion that opens toward the vehicle upper side. The hood 12 is structured with an outer panel 120 and an inner panel 12I being main portions thereof. Although not illustrated, the hood 12 is supported, at the rear end side, at the vehicle body so as to be rotatable around an axis that runs along the vehicle transverse direction, and opens and closes the engine room 11 due to this rotation with respect to the vehicle body.

Further, an unillustrated striker is provided so as to project-out downwardly at the front end side of the hood 12. Due to this striker being engaged with a latch at the vehicle body side, the hood 12 is locked in a state of closing the engine room 11. The automobile V travels in a state in which the engine room 11 is closed by the hood 12.

A radiator support upper member 14, that serves as a skeleton member and that is long along the vehicle transverse direction, is disposed at the lower side in the vehicle up-down direction with respect to a front end portion 12F of the hood 12. More concretely, the radiator support upper member 14 is disposed directly in front of the mounted region of the striker at the hood 12. The radiator support upper member 14 is a structure that supports the upper end side of an unillustrated air-cooled heat exchanger such as a radiator or a condenser for the air conditioning unit or the like.

The radiator support upper member 14 is structured to include a top wall 14U that faces upward and a front wall 14F that faces forward. In the present embodiment, the radiator support upper member 14 forms a closed cross-sectional structure that is substantially rectangular in side sectional view, by the top wall 14U and the front wall 14F and a bottom wall 14L and a rear wall 14R.

A bracket 16 is mounted to the radiator support upper member 14 so as to project-out toward the front side in the vehicle front-rear direction with respect to the radiator support upper member 14. The bracket 16 holds a horn 18, that is a warning device that serves as a part, at the predetermined position with respect to the vehicle body shown in Fig. 1A and Fig. 3.

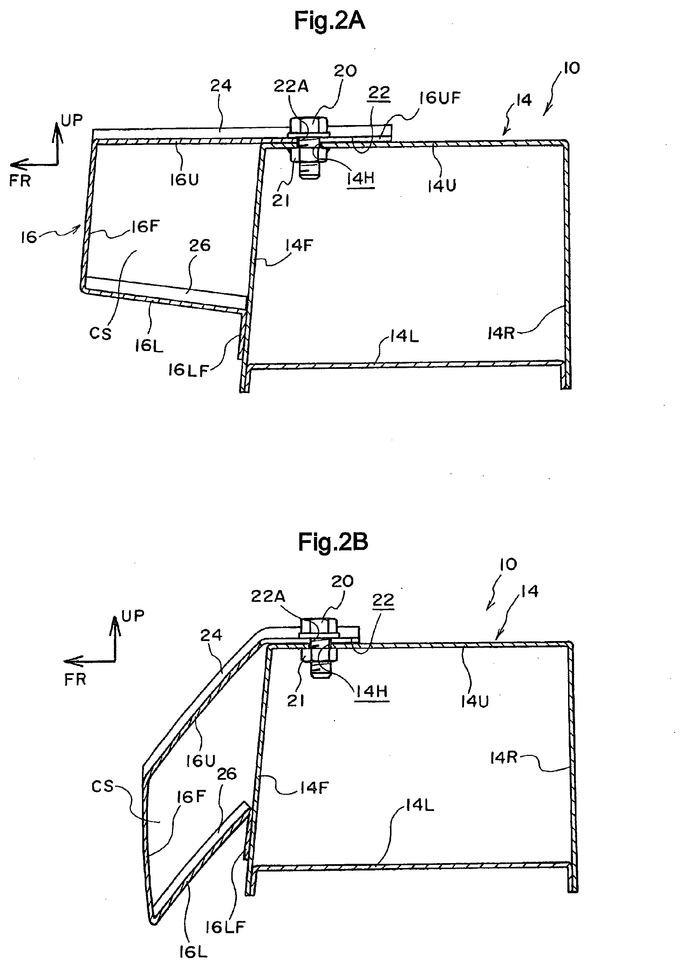

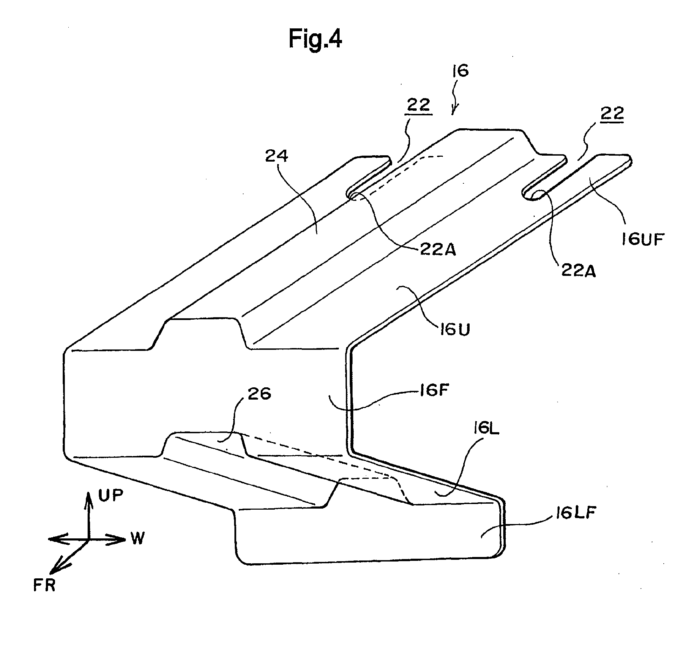

As shown in Fig. 4, this bracket 16 is structured to include a front plate portion 16F that faces the front wall 14F of the radiator support upper member 14, a ceiling plate portion 16U that extends toward the rear from the upper end of the front plate portion 16F, and a bottom plate portion 16L that extends toward the rear from the lower end of the front plate portion 16F. As shown in Fig. 2A, the front plate portion 16F, the bottom plate portion 16L and the ceiling plate portion 16U of the bracket 16 are a structure that, with the front wall 14F of the radiator support upper member 14, forms a closed cross-sectional CS that is substantially rectangular in side view.

This bracket 16 is fixed to the radiator support upper member 14 at an upper flange 16UF, that serves as an upper fixing portion and is provided at the rear end side of the ceiling plate portion 16U, and a lower flange 16LF, that serves as a lower fixing portion and is provided at the rear end side of the bottom plate portion 16L. The upper flange 16UF is superposed on the top wall 14U of the radiator support upper member 14 and is fixed to the top wall 14U by fastening using bolts 20.

Concretely, as shown in Fig. 2A, the upper flange 16UF is extended rearward so as to form the same surface from the portion that structures the closed cross-section CS at the ceiling plate portion 16U, and has bolt through portions through which the bolts 20 (see Fig. 2A) are passed. The bolt through portions in this embodiment are made to be slits 22 that are long in the front-rear direction and that open rearward. The two slits 22 are formed in parallel in the vehicle transverse direction at the upper flange 16UF that is fastened by the two bolts 20 that are disposed so as to be apart in the vehicle transverse direction.

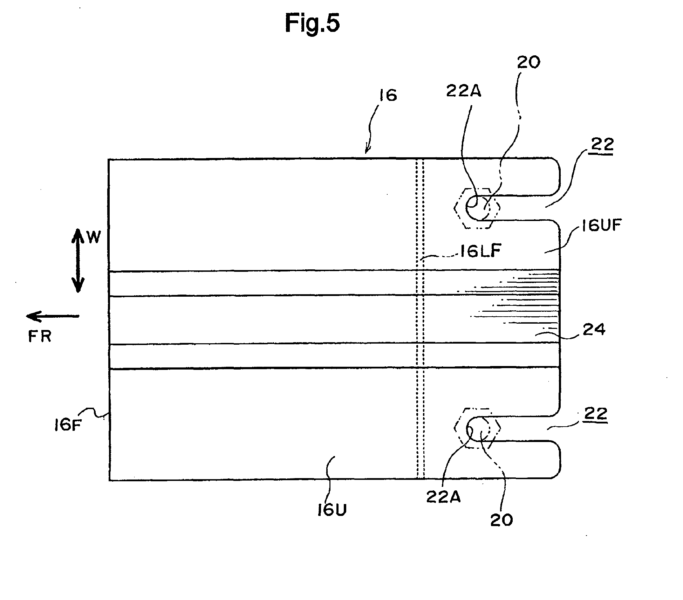

The ceiling plate portion 16U is fastened and fixed to the top wall 14U due to the bolts 20 being passed-through the front end portions of the slits 22 and bolt holes 14H that are formed in the top wall 14U, and being screwed-together with weld nuts 21 that are provided at the lower surface side of the top wall 14U. As shown in Fig. 5 as well, the rear side portions with respect to front end portions 22A, that are the portions that the bolts 20 are passed-through at the respective slits 22, correspond to bolt relief portions in the present invention. The slits 22 can also be interpreted as being openings in which rectangular slits of the same width as the diameters of the bolt holes are provided continuously at the rear of the circular bolt holes.

The lower flange 16LF is formed as if the rear end portion of the bottom plate portion 16L were folded-over downward. This lower flange 16LF is fixed to the front wall 14F by spot welding, in a state of being superposed on the front wall 14F of the radiator support upper member 14.

Further, in this embodiment, beads 24, 26, that are long in the front-rear direction, are formed at the ceiling plate portion 16U, the bottom plate portion 16L, respectively. The bead 24 extends from the front end to the rear end (at least the upper flange 16UF that is described later) of the ceiling plate portion 16U. The bead 26 extends from the front end to the rear end (the lower flange 16LF that is described later) of the bottom plate portion 16L. In this embodiment, the single bead 24 is disposed at the vehicle transverse direction central portion of the ceiling plate portion 16U so as to be sandwiched in the vehicle transverse direction by the pair of slits 22. Further, the bead 26 is disposed at the vehicle transverse direction central portion of the bottom plate portion 16L. As shown in Fig. 4, these bead 24, bead 26 are made to be convex beads that project-out upwardly from the ceiling plate portion 16U, the bottom plate portion 16L, respectively, and that open downward.

The support rigidity of the bracket 16 needed for the horn 18 is ensured by the structure that forms the closed cross-section CS, the structure of providing the upper and lower bead 24, bead 26, and the structure of mounting to the radiator support upper member 14 by the bolts 20 and spot welding, as described above.

Here, the fastening load of the bracket 16 to the radiator support upper member 14 by the bolts 20 is set (managed) to a prescribed fastening load. This prescribed fastening load is set as a load by which the fastened and fixed state of the bracket 16 to the radiator support upper member 14 by the bolts 20 is cancelled when a load of a predetermined value or more is inputted from the front upper side toward the rear lower side to the front end side of the bracket 16 (the closed cross-section CS). This load is made to be a load that is sufficiently small with respect to load inputted to the bracket 16 via the hood 12 in a pedestrian femoral region protection test, and is sufficiently large with respect to load that is inputted to the bracket 16 from the horn 18 in the usual usage state of the automobile V. The fixing cancelling means in the present invention is structured by the setting of this fastening load and by the slits 22 (bolt relief portions).

### Operation of the present embodiment is described next.

In the vehicle body front portion structure 10 of the above-described structure, usually, a state in which the horn 18 is supported at the radiator support upper member 14 via the bracket 16 is maintained. The bracket 16 is fastened to the radiator support upper member 14 by the aforementioned prescribed load by the bolts 20, and the beads 24, 26 are formed at the ceiling plate portion 16U and the bottom plate portion 16L, respectively. Therefore, the bracket 16 can ensure a sufficient supporting rigidity of the horn 18. Due thereto, in the vehicle body front portion structure 10, the occurrence of chattering noise that accompanies operation of the horn 18 is prevented or effectively suppressed. Further, the durability of the bracket 16 improves due to the beads 24, 26.

In a pedestrian femoral region protection test, when a collision body I collides with the front end portion 12F of the hood 12 as shown in Fig. 1B, the hood 12 is deformed such that the portion, that is further toward the front side than the region that is restrained at the vehicle body by the striker, is bent downwardly. The collision energy due to the collision of the collision body I is absorbed by this deformation.

Accompanying the above-described deformation of the hood 12, the front end portion of the hood 12 collides with the bracket 16, from the front upper side. Therefore, load of the aforementioned predetermined value or more is applied to the bracket 16 from the front upper side. Thus, the bracket 16 bendingly deforms such that the closed cross-section CS is crushed as shown in Fig. 1B while the fixed state of the ceiling plate portion 16U by the bolts 20 is cancelled and the rear portion of the ceiling plate portion 16U is pulled-out forward so as to slide on the top wall 14U.

Namely, at the bracket 16, the angle formed by the ceiling plate portion 16U and the front plate portion 16F widens, the angle formed by the front plate portion 16F and the bottom plate portion 16L contracts, and the angle formed by the bottom plate portion 16L and the lower flange 16LF contracts, and deformation arises in the direction of permitting further deformation of the front end of the hood 12 (collapsing like the crushing of a box). Due thereto, even after the hood 12 contacts the bracket 16, the impact absorbing stroke of the collision body I is ensured.

Here, in the vehicle body front portion structure 10, when load of the predetermined value or more is applied to the bracket 16 from the front upper side, the fixed state of the ceiling plate portion 16U, by the bolts 20, of the bracket 16 is cancelled, and therefore, the above-described deformation is generated by a low load at the bracket 16. Namely, because the bracket 16 translates from the supported structure by the upper flange 16UF and the lower flange 16LF to a structure of (that can be approximated as) cantilever support by the lower flange 16LF, the bracket 16 is deformed by a low load, as compared with a structure in which this translation does not occur.

Further, in the vehicle body front portion structure 10, because the bead 26 of the bottom plate portion 16L projects-out upwardly, the bead is not nipped-in between the bottom plate portion 16L and the lower flange 16LF at which the angle formed thereby contracts as described above. Therefore, the bead 26 does not obstruct the deformation that contracts the aforementioned angle formed by the bottom plate portion 16L and the lower flange 16LF of the bracket 16. In this way, in the vehicle body front portion structure 10, in a structure that ensures the supporting rigidity of the horn 18 by the bracket 16, the load needed to deform the bracket 16 after contact of the hood 12 can be kept small.

Further, in the vehicle body front portion structure 10, the bead 24 of the ceiling plate portion 16U projects-out upward, and therefore, between the ceiling plate portion 16U and the front plate portion 16F at which the angle formed thereby attempts to widen as described above, the bead does not receive pulling that resists this widening of the angle. For this reason as well, in a structure that ensures the supporting rigidity of the horn 18 by the bracket 16, this contributes to keeping small the load that is needed to deform the bracket 16 after contact of the hood 12.

Namely, in a comparative example that uses, for example, a bracket that forms a simple closed cross-sectional structure, because the load needed for deformation is large, downward deformation of the hood 12 is restrained, and bottoming arises or the peak load that is applied to the collision body I is increased. In contrast, in the vehicle body front portion structure 10 that uses the bracket 16, the load needed for deformation of the bracket 16 can be made to be sufficiently small as compared with the comparative example, and therefore, even after contact of the front end portion of the hood 12, the effects on the performance of absorbing the collision energy of the collision body I by the deformation of the hood 12 are small.

In this way, in the vehicle body front portion structure 10 relating to the embodiment, when the collision body I collides with the front end of the hood 12, the impact energy can be absorbed by the needed load even while the hood 12 interferes with the bracket 16.

### (Modified Examples of Bolt Relief Portions)

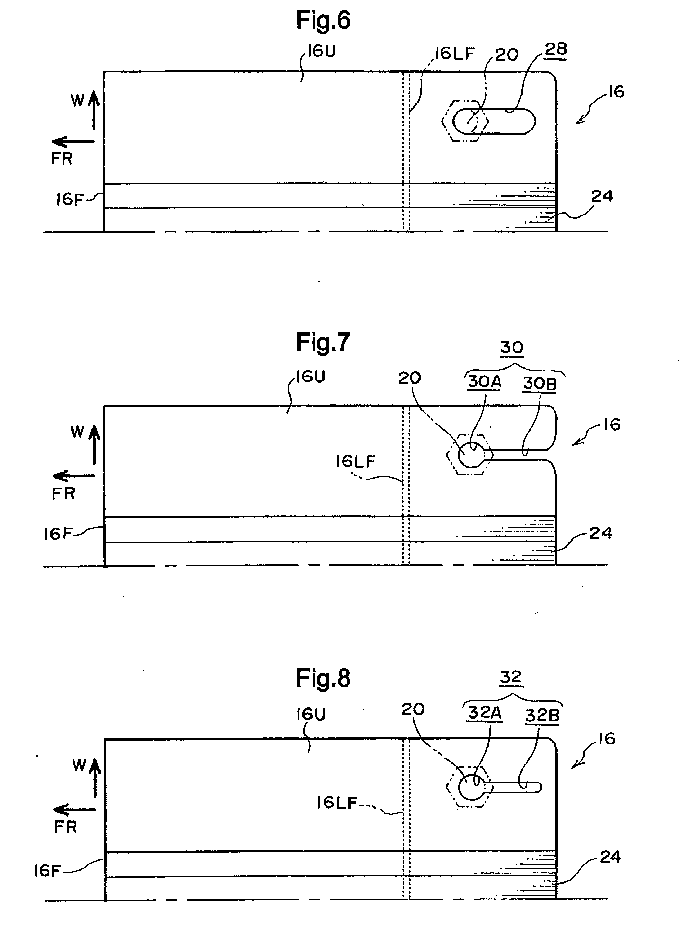

In the above-described embodiment, the slits 22 are disclosed as an example of the bolt relief portions, but the present invention is not limited to the same, and can be made to be the modified examples shown in Fig. 6 through Fig. 8 for example.

### (First Modified Example)

In a first modified example shown in Fig. 6, instead of the slits 22, long holes 28 are provided in the upper flange 16UF of the ceiling plate portion 16U. In this modified example, the ceiling plate portion 16U of the bracket 16 is fastened and fixed to the top wall 14U of the radiator support upper member 14 by the bolts 20 in a state in which the bolts 20 are inserted-through the front end sides of the long holes 28. Accordingly, the rear side portions, with respect to the portions (the front end portions) that the bolts 20 are passed through, at the long holes 28 correspond to the bolt relief portions in the present invention.

### (Second Modified Example)

In a second modified example shown in Fig. 7, instead of the slits 22 that are made to be a uniform width at the respective portions in the longitudinal direction, stepped slits 30 are provided in the upper flange 16UF of the ceiling plate portion 16U. The stepped slits 30 are a shape in which a bolt hole 30A, through which the bolt 20 is inserted, and a narrow-width slit 30B, that is formed from the rear end of the bolt hole 30A to the rear end of the upper flange 16UF, are connected. The widths of the slits 30B are smaller than the diameters of the bolts 20 (the bolt holes 30A). In the second modified example, the slits 30B correspond to the bolt relief portions in the present invention.

In this second modified example, the load, by which the fixing (restraining) of the bracket 16 by the bolts 20 is cancelled, is set by the fastening load of the bolts 20 and by the slits 30B. Namely, the sum of the fastening load of the bolts 20 and the load of the bolts 20 moving relatively while pushing open the slits 30B (the drawing load) is made to be the load by which the fixing (restraining) of the bracket 16 by the bolts 20 is cancelled. Note that the aforementioned drawing load can also be interpreted as a portion of the load generated at the time of absorbing the collision energy of the collision body I. Namely, in a structure in which the load generated at the hood 12 alone is small (insufficient), the energy absorption load (stroke) can be controlled by utilizing the aforementioned drawing load that is generated by the edge portions of the slits 30B and the bolts 20 at the bracket 16.

### (Third Modified Example)

In a third modified example shown in Fig. 18, instead of the slits 22 that are made to be a uniform width at the respective portions in the longitudinal direction, stepped holes 32 are provided in the upper flange 16UF of the ceiling plate portion 16U. The stepped holes 32 are a shape in which a narrow-width long hole 32B, that is long in the front-rear direction, is connected to the rear end of a bolt hole 32A through which the bolt 20 is inserted. The widths of the long holes 32B are smaller than the diameters of the bolts 20 (the bolt holes 32A). In the third modified example, the long holes 32B correspond to the bolt relief portions in the present invention. In the third modified example, operation and effects that are similar to the second modified example are obtained.

### (Modified Examples of Bead)

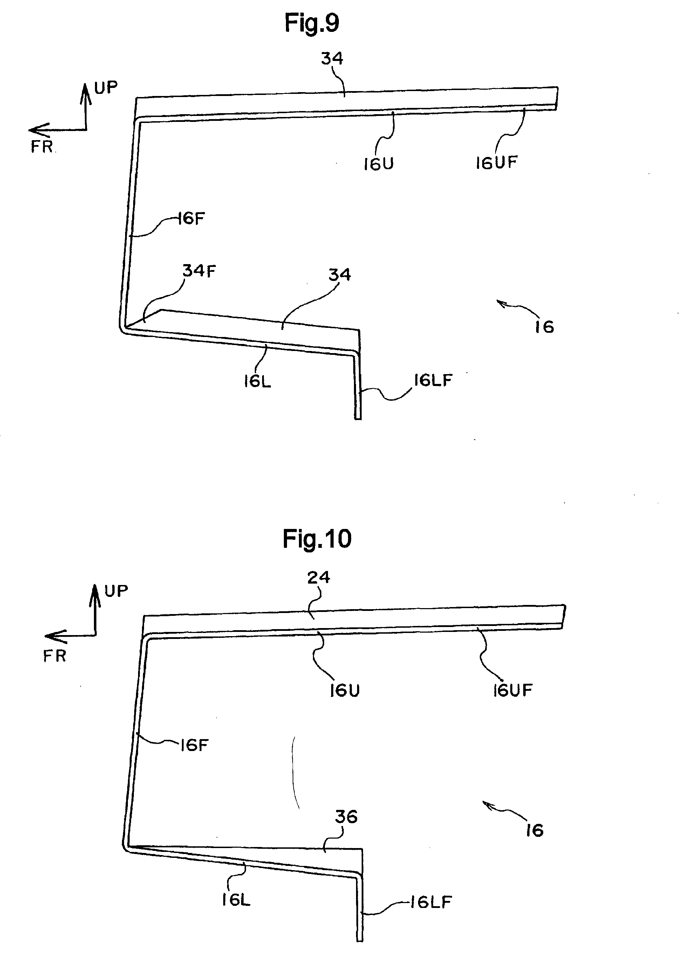

The above-described embodiment discloses an example in which the bead 26, whose projecting height is constant along the entire length, is formed at the bottom plate portion 16L, but the present invention is not limited to the same, and can be made to be the modified examples shown in Fig. 9 through Fig. 11 for example.

### (Fourth Modified Example)

In a fourth modified example shown in Fig. 9, a bead 34, at which the projecting height of a front end portion 34F gradually decreases toward the front, is provided at the bottom plate portion 16L instead of the bead 26. At the portion other than the front end portion 34F at the bead 34, the projecting height from the bottom plate portion 16L is constant. In this modified example, because the projecting height of the front end portion 34F gradually decreases, it is difficult for the deformation, in the direction in which the angle formed by the front plate portion 16F and the bottom plate portion 16L contracts, to be obstructed by the bead 34. Namely, at the bracket 16 that is provided with the bead 34, by an even lower load, deformation (collapsing like the crushing of a box) arises in the direction of permitting deformation of the front end of the hood 12.

### (Fifth Modified Example)

In a fifth modified example shown in Fig. 10, a bead 36, whose projecting height gradually decreases toward the front over the entire length, is provided at the bottom plate portion 16L instead of the bead 26. In this modified example, because the projecting height of the bead 36 gradually decreases, it is difficult for the deformation, in the direction in which the angle formed by the front plate portion 16F and the bottom plate portion 16L contracts, to be obstructed by the bead 36. Namely, at the bracket 16 that is provided with the bead 36, by an even lower load, deformation (collapsing like the crushing of a box) arises in the direction of permitting deformation of the front end of the hood 12.

Note that the fourth and fifth modified examples show examples in which the projecting heights of the front ends of the beads 34, 36 are substantially 0, but are not limited to this, and, for example, may be structures in which the projecting heights of the front ends of the beads 34, 36 are greater than 0.

### (Sixth Modified Example)

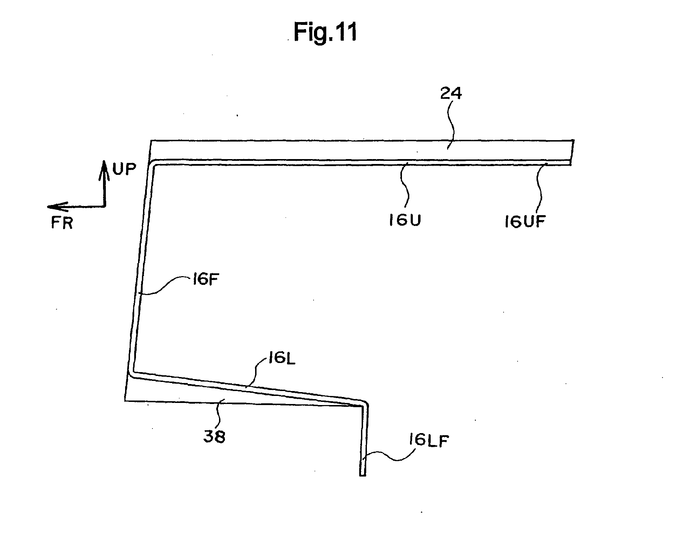

In a sixth modified example shown in Fig. 11, a bead 38 that projects-out downward is provided at the bottom plate portion 16L instead of the bead 26 that projects-out upward. The downwardly projecting height of the bead 38 from the bottom plate portion 16L gradually decreases toward the rear. In this modified example, because the projecting height of the bead 36 gradually decreases, it is difficult for the deformation, in the direction in which the angle formed by the bottom plate portion 16L and the lower flange 16LF contracts, to be obstructed by the bead 38 even though the bead 38 projects-out downward. Namely, at the bracket 16 that is provided with the bead 38, by a low load, deformation (collapsing like the crushing of a box) arises in the direction of permitting deformation of the front end of the hood 12.

Note that the sixth modified example illustrates an example in which the projecting height of the rear end of the bead 38 is substantially 0, but is not limited to this, and, for example, may be a structure in which the projecting height of the rear end of the bead 38 is greater than 0.

Note that the above-described embodiment illustrates an example in which the horn 18 is mounted as a part to the bracket 16, but the present invention is not limited to this, and may be structured such that, for example, a part such as a front monitoring radar (a distance sensor) or the like is mounted to the bracket 16.

Further, the above-described embodiment illustrates an example in which the hood 12 closes the engine room 11, but the present invention is not limited to this, and may be a structure that closes, for example, a cargo compartment provided at the vehicle front portion, or a space that houses a battery or the like instead of the engine (power unit).

## Claims

1. A vehicle body front portion structure (10) comprising:
a hood member (12) that covers a front portion of a vehicle from an upper side;
a skeleton member (14) that has a top wall (14U) facing an upper side in a vehicle up-down direction and a front wall (14F) facing a front side in a vehicle front-rear direction, and that is long along a vehicle transverse direction, and that is disposed at a vehicle lower side with respect to a front end side, in the vehicle front-rear direction, of the hood member (12); **characterized by**
a bracket (16) for part fixing that is structured to include a ceiling plate portion (16U) at whose rear end portion in the vehicle front-rear direction is provided an upper joining portion that is fixed to the top wall (14U), and a bottom plate portion (16L) at whose rear end portion in the vehicle front-rear direction is provided a lower joining portion that is fixed to the front wall (14F), and a front plate portion (16F) that connects a front end side in the vehicle front-rear direction of the ceiling plate portion (16U) and a front end side in the vehicle front-rear direction of the bottom plate portion (16L); and
fixing canceling means (22), provided between the upper joining portion of the ceiling plate portion (16U) and the top wall (14U) of the skeleton member (14), for canceling a fixed state of the upper joining portion and the top wall (14U) such that the upper joining portion is displaced relatively toward a front side in the vehicle front-rear direction with respect to the top wall (14U), with respect to input of load of a predetermined value or more from a vehicle front upper side to the bracket (16).

2. The vehicle body front portion structure (10) of claim 1, wherein the fixing canceling means (22) is structured to include a fastening structure by a bolt (20) that fixes the ceiling plate portion (16U) to the top wall by a predetermined fastening load, and a bolt relief portion (22A) that is connected, at a rear side in the vehicle front-rear direction, to a portion through which the bolt (20) is inserted at the ceiling plate portion (16U).

3. The vehicle body front portion structure (10) of claim 1 or claim 2, wherein
the lower joining portion is fixed to the front wall of the skeleton member (14) at a flange portion that is formed by a rear end portion, in the vehicle front-rear direction, of the bottom plate portion (16L) being folded-over downward in the vehicle up-down direction, and
at the bottom plate portion (16L), a bead, that is long in the vehicle front-rear direction and is convex toward an upper side in the vehicle up-down direction, is formed from the front plate portion (16F) to the flange portion.

4. The vehicle body front portion structure (10) of claim 3, wherein a projecting height of the bead from the bottom plate portion (16L) at the front plate portion side is smaller than a projecting height from the bottom plate portion (16L) at the flange portion side.

5. The vehicle body front portion structure (10) of any one of claim 1 through claim 4, wherein, at the ceiling plate portion (16U), a bead, that is long in the vehicle front-rear direction and is convex toward an upper side in the vehicle up-down direction, is formed from the front plate portion (16F) to the upper joining portion.

## Patentansprüche

1. Struktur (10) für den Vorderteil einer Fahrzeugkarosserie mit:
einem Haubenteil (12), das einen Vorderteil eines Fahrzeugs von einer Oberseite her abdeckt;
einem Skelettteil (14), das eine obere Wand (14U) aufweist, die einer oberen Seite in einer Fahrzeughöhenrichtung gegenüberliegt und eine vordere Wand (14F), die einer Vorderseite in einer Fahrzeuglängsrichtung gegenüberliegt, und das in einer Fahrzeugbreitenrichtung lang ist, und das bezüglich einer Frontendseite des Haubenteils (12) in der Fahrzeuglängsrichtung weiter unten am Fahrzeug angeordnet ist; **gekennzeichnet durch**
einen Halter (16) zum Befestigen eines Teils, das so aufgebaut ist, dass es einen Dachplattenabschnitt (16U) aufweist, an dessen hinterem Endabschnitt in der Fahrzeuglängsrichtung ein oberer Fügeabschnitt vorgesehen ist, der an der oberen Wand (14U) befestigt ist, und einen Bodenplattenabschnitt (16L), an dessen hinterem Endabschnitt in der Fahrzeuglängsrichtung ein unterer Fügeabschnitt vorgesehen ist, der an der Vorderwand (14F) befestigt ist, und einen Vorderplattenabschnitt (16F), der eine in der Fahrzeuglängsrichtung vordere Endseite des Dachplattenabschnitts (16U) mit einer in der Fahrzeuglängsrichtung vorderen Endseite des Bodenplattenabschnitts (16L) verbindet; und
einer Befestigungslöseeinrichtung (22), die zwischen dem oberen Fügeabschnitt des Dachplattenabschnitts (16U) und der oberen Wand (14U) des Skelettteils (14) vorgesehen ist, um einen befestigten Zustand des oberen Fügeabschnitts mit der oberen Wand (14U) so zu lösen, dass der obere Fügeabschnitt bezüglich der oberen Wand (14U) in der Fahrzeuglängsrichtung hin zu einer Vorderseite relativ verschoben wird, sofern eine Last mit einem vorab festgelegten Wert oder mehr von einer Oberseite der Fahrzeugfront auf den Halter (16) wirkt.

2. Struktur (10) für den Vorderteil einer Fahrzeugkarosserie nach Anspruch 1, wobei die Befestigungslöseeinrichtung (22) so aufgebaut ist, dass sie einen Befestigungsaufbau durch eine Schraube (20) umfasst, der den Dachplattenabschnitt (16U) an der oberen Wand mit einer vorab festgelegten Befestigungslast befestigt, und einen Schraubenlöseabschnitt (22A), der an einer Rückseite in der Fahrzeuglängsrichtung mit einem Abschnitt verbunden ist, durch den die Schraube (20) an dem Dachplattenabschnitt (16U) eingeführt ist.

3. Struktur (10) für den Vorderteil einer Fahrzeugkarosserie nach Anspruch 1 oder 2, wobei
der untere Verbindungsabschnitt mit der Vorderwand des Skelettteils (14) an einem Flanschabschnitt befestigt ist, der durch einen in der Fahrzeuglängsrichtung hinteren Endabschnitt des Bodenplattenabschnitts (16L) gebildet ist, der in der Fahrzeughöhenrichtung nach unten umgefaltet ist, und
wobei an dem Bodenplattenabschnitt (16L) eine Sicke vom Vorderplattenabschnitt (16F) zum Flanschabschnitt geformt ist, die in der Fahrzeuglängsrichtung lang ist und hin zu einer Oberseite in der Fahrzeughöhenrichtung konvex ist.

4. Struktur (10) für den Vorderteil einer Fahrzeugkarosserie nach Anspruch 3, wobei eine Höhe des Hervorstehens der Sicke aus dem Bodenplattenabschnitt (16L) auf der Seite des Vorderplattenabschnitts kleiner als eine Höhe des Hervorstehens der Sicke aus dem Bodenplattenabschnitt (16L) auf der Seite des Flanschabschnitts ist.

5. Struktur (10) für den Vorderteil einer Fahrzeugkarosserie nach einem der Ansprüche 1 bis 4, wobei an dem Dachplattenabschnitt (16U) eine Sicke, die in der Fahrzeuglängsrichtung lang ist und in der Fahrzeughöhenrichtung hin zu einer Oberseite konvex ist, von dem Vorderplattenabschnitt (16F) hin zum oberen Verbindungsabschnitt gebildet ist.

## Revendications

1. Structure (10) de partie avant de carrosserie de véhicule comprenant :
un élément formant capot (12) qui couvre une partie avant d'un véhicule à partir d'un côté supérieur ;
un élément formant ossature (14) qui comporte une paroi supérieure (14U) tournée vers le côté supérieur dans la direction haut-bas de véhicule et une paroi avant (14F) tournée vers le côté avant dans la direction avant-arrière de véhicule et qui est allongée suivant la direction transversale de véhicule, et qui est disposé du côté inférieur de véhicule par rapport au côté d'extrémité avant, dans la direction avant-arrière de véhicule, de l'élément formant capot (12),
**caractérisée par** :
une console (16) destinée à fixer des pièces qui est constituée pour inclure une partie formant plaque de plafond (16U) à la partie d'extrémité arrière de laquelle dans la direction avant-arrière de véhicule est disposée une partie de jonction supérieure qui est fixée à la paroi supérieure (14U), et une partie formant plaque de fond (16L) à la partie d'extrémité arrière de laquelle dans la direction avant-arrière de véhicule est disposée une partie de jonction inférieure qui est fixée à la paroi avant (14F), et une partie formant plaque avant (16F) qui relie le côté d'extrémité avant dans la direction avant-arrière de véhicule de la partie formant plaque de plafond (16U) et le côté d'extrémité avant dans la direction avant-arrière de véhicule de la partie formant plaque de fond (16L) ; et
un moyen (22) de suppression de fixation, prévu entre la partie de jonction supérieure de la partie formant plaque de plafond (16U) et la paroi supérieure (14U) de l'élément formant ossature (14), destiné à supprimer l'état fixé de la partie de jonction supérieure et de la paroi supérieure (14U) de façon que la partie de jonction supérieure soit déplacée de manière relative vers le côté avant dans la direction avant-arrière de véhicule par rapport à la paroi supérieure (14U), en fonction de l'application, à la console (16), d'une charge d'au moins une valeur prédéterminée depuis le côté supérieur avant de véhicule.

2. Structure (10) de partie avant de carrosserie de véhicule selon la revendication 1, dans laquelle le moyen (22) de suppression de fixation est constitué pour inclure une structure d'attache par un boulon (20) qui fixe la partie formant plaque de plafond (16U) à la paroi supérieure par une charge d'attache prédéterminée, et une partie (22A) de libération de boulon qui est raccordée, au niveau du côté arrière dans la direction avant-arrière de véhicule, à une partie à travers laquelle le boulon (20) est inséré au niveau de la partie formant plaque de plafond (16U).

3. Structure (10) de partie avant de carrosserie de véhicule selon la revendication 1 ou la revendication 2,
dans laquelle la partie de jonction inférieure est fixée à la paroi avant de l'élément formant ossature (14) au niveau d'une partie formant rebord qui est formée par la partie d'extrémité arrière, dans la direction avant-arrière de véhicule, de la partie formant plaque de fond (16L) qui est repliée vers le bas dans la direction haut-bas de véhicule, et
au niveau de la partie formant plaque de fond (16L), une nervure, qui est allongée dans la direction avant-arrière de véhicule et qui est convexe vers le côté supérieur dans la direction haut-bas de véhicule, est formée depuis la partie formant plaque avant (16F) jusqu'à la partie formant rebord.

4. Structure (10) de partie avant de carrosserie de véhicule selon la revendication 3, dans laquelle la hauteur de saillie de la nervure à partir de la partie formant plaque de fond (16L) du côté de la partie formant plaque avant est plus petite que la hauteur de saillie par rapport à la partie formant plaque de fond (16L) du côté de la partie formant rebord.

5. Structure (10) de partie avant de carrosserie de véhicule selon l'une quelconque de la revendication 1 à la revendication 4, dans laquelle, au niveau de la partie formant plaque de plafond (16U), une nervure, qui est allongée dans la direction avant-arrière de véhicule et qui est convexe vers le côté supérieur dans la direction haut-bas de véhicule, est formée depuis la partie formant plaque avant (16F) jusqu'à la partie de jonction supérieure.
